(19) Europäisches Patentamt

European Patent Office

Office européen des brevets

(11) **EP 0 899 238 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.[7]: **C02F 1/44**, B01D 61/02, B01D 65/02

(21) Anmeldenummer: **98116067.4**

(22) Anmeldetag: **26.08.1998**

(54) **Verfahren und Vorrichtung zum Aufbereiten von Wasser durch Umkehrosmose oder Nanofiltration**

Method and apparatus for treating water by reverse osmosis or nanofiltration

Procédé et appareil pour le traitement de l'eau par osmose inverse ou nanofiltration

(84) Benannte Vertragsstaaten:
**AT CH DE ES FR GB IT LI**

(30) Priorität: **28.08.1997 DE 19737529**
**14.10.1997 DE 19745333**

(43) Veröffentlichungstag der Anmeldung:
**03.03.1999 Patentblatt 1999/09**

(73) Patentinhaber: **Ondeo Industrial Solutions GmbH**
**70565 Stuttgart (DE)**

(72) Erfinder:
• **Nagel, Rolf Dipl.-Ing.**
**73663 Berglen (DE)**
• **Rau, Eckehard, Dipl.**
**73252 Lenningen (DE)**

(74) Vertreter: **Dreiss, Fuhlendorf, Steimle & Becker**
**Patentanwälte,**
**Postfach 10 37 62**
**70032 Stuttgart (DE)**

(56) Entgegenhaltungen:
**EP-A- 0 768 112          US-A- 5 207 916**

• **PATENT ABSTRACTS OF JAPAN vol. 096, no. 009, 30. September 1996 -& JP 08 132038 A (JAPAN ORGANO CO LTD), 28. Mai 1996 -& DATABASE WPI Section Ch, Week 9631 Derwent Publications Ltd., London, GB; Class D15, AN 96-304671 XP002083730**

• **PATENT ABSTRACTS OF JAPAN vol. 097, no. 010, 31. Oktober 1997 & JP 09 155344 A (NITTO DENKO CORP), 17. Juni 1997 -& DATABASE WPI Section Ch, Week 9221 Derwent Publications Ltd., London, GB; Class D15, AN 98-233505 XP002083731**

• **PATENT ABSTRACTS OF JAPAN vol. 096, no. 012, 26. Dezember 1996 -& JP 08 206460 A (TORAY IND INC), 13. August 1996 -& DATABASE WPI Section Ch, Week 9642 Derwent Publications Ltd., London, GB; Class D15, AN 96-420279 XP002083732 -& CHEMICAL ABSTRACTS, vol. 125, no. 22, 25. November 1996 Columbus, Ohio, US; abstract no. 279478, XP002083729**

• **PATENT ABSTRACTS OF JAPAN vol. 002, no. 136 (C-027), 11. November 1978 -& JP 53 102281 A (EBARA INFILCO CO LTD), 6. September 1978 -& DATABASE WPI Section Ch, Week 7904 Derwent Publications Ltd., London, GB; Class J01, AN 79-065513b XP002083733**

• **PATENT ABSTRACTS OF JAPAN vol. 004, no. 166 (C-031), 18. November 1980 & JP 55 109406 A (TORAY IND INC), 22. August 1980 -& DATABASE WPI Section Ch, Week 8040 Derwent Publications Ltd., London, GB; Class D15, AN 80-70582c XP002083734**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zum Aufbereiten von Wasser, insbesondere zum Herstellen von Reinstwasser, z.B. für pharmazeutische Anwendungen, durch Umkehrosmose oder Nanofiltration, mit den Merkmalen des Oberbegriffs des Anspruchs 1. Ein solches Verfahren ist bekannt aus JP-A-08 132 038.

Umkehrosmose- bzw. Nanofiltrationsverfahren sowie Anlagen zu ihrer Durchführung sind seit langem bekannt. Umkehrosmoseoder Nanofiltrationsanlagen bestehen im wesentlichen aus Membranmodulen, einer vorgeschalteten Druckpumpe, sowie Rohrleitungen, Ventilen und Druck- und Durchflußmeßgeräten. Die Membranmodule enthalten semipermeable Membranen, die für Wasser durchlässig sind, aber eine geringe Durchlässigkeit für Salze bzw. deren Ionen und sonstige Wasserinhaltsstoffe aufweisen. Über die Druckpumpe wird ein Betriebsdruck erzeugt, der wenigstens geringfügig höher sein muss als der osmotische Druck in der Lösung als Folge der sich einstellenden Partialdruckdifferenzen der durch die Membran zurückgehaltenen Ionen zuzüglich dem hydraulischen Widerstand der Membran. Die semipermeablen Membranen können in ansich bekannter Weise aus Flachmembranen, Wickelmembranen, Hohlfasermembranen, Kapillarmembranen oder Rohrmembranen gebildet sein.

Die aufzubereitende Lösung wird in der Osmose- oder Nanofiltrationsstufe in zwei Teilströme, Permeat und zurückgehaltenes Konzentrat, aufgeteilt. Die auf der Konzentratseite der Membran entlanggeführte Flüssigkeit wird aufkonzentriert während das durch die Membran permeierende Wasser entsalzt wird.

Das Verhältnis des Permeat-Volumenstroms zum eingangs in die Osmose- oder Nanofiltrationsstufe eingeleiteten Volumenstrom wird als WCF-Faktor (Water Conversion Factor) bezeichnet und ist folgendermaßen definiert

$$WCF = Permeatmenge/Einspeisemenge * 100 \%.$$

Aus diesem WCF-Faktor ergibt sich die Aufkonzentrierungsrate CF auf der Konzentratseite nach $CF = 100/(100-WCF)$. Werden bei einer Anlage ein Volumenstrom in Höhe von beispielsweise 1,25 m$^3$/h als Einspeisemenge zugeführt und wird hieraus 1 m$^3$/h Permeat gewonnen, so beträgt der WCF-Faktor 80 % und die Aufkonzentrierungsrate CF ist 5, was bedeutet, dass die Ionenkonzentration auf der Konzentratseite im Vergleich zur Konzentration des eingespeisten Rohwassers um den Faktor 5 erhöht wurde.

Die Höhe des WCF-Faktors, der ein Maß für die Menge des als Endprodukt nutzbaren Wassers (Permeat) zur Menge des zu verwerfenden Wassers (Konzentrat) darstellt, ist entscheidend für die Wirtschaftlichkeit des Verfahrens. Fouling- und Scalingeigenschaften des Rohwassers setzen jedoch eine Schranke für die Erhöhung des WCF-Faktors. Fäulniserscheinungen (Fouling) verursachen Membranbeläge, beispielsweise organischer Natur, welche den Strömungswiderstand der Membran derart erhöhen, dass der Prozeß unterbrochen und die Membran gereinigt werden muß. Aus diesem Grund wird eine Umkehrosmoseoder Nanofiltrationsstufe zumeist mit einer Vorbehandlung (Enthärtung, Entkarbonisierung, Säuredosierung, Inhibitordosierung) des flüssigen Mediums gefahren. Eine erste Umkehrosmose- oder Nanofiltrationsstufe wird vorzugsweise im sauren Bereich gehalten. Unter Scaling wird das Auftreten von Ausfällungen von Salzen verstanden, deren Löslichkeit durch die Aufkonzentrierung auf der Konzentratseite überschritten wird.

Umkehrosmose- oder Nanofiltrationsverfahren werden üblicherweise so ausgeführt, dass der WCF-Faktor zwischen 50 und 80 % liegt, und zwar abhängig von der Zusammensetzung des aufzubereitenden Wassers und einer Rohwasservorbehandlung.

JP-A 09155344 offenbart ein zweistufiges Verfahren, wobei anstelle einer Chemikalienzugabe durch eine Vorrichtung, beispielsweise einen Ionentauscher, wiederum Härtebildner, also diejenigen Substanzen, welche Ausfällungen und damit ein Zusetzen der Membran bewirken, entfernt werden sollen.

Aus EP-A-0 768 112 ist ein einstufiges Verfahren bekannt, wobei zur Reinigung der semipermeablen Membran periodisch Reinwasser im wesentlichen unter Abwesenheit eines statischen Druckgefälles infolge des osmotischen Drucks von der Reinwasserseite durch die Membran zur Konzentratseite strömt und dabei die Membran gereinigt wird. Ähnlichen Inhalt scheint JP-A-53102281 zu haben.

Aus US-A-5,207,916 ist wiederum ein zweistufiges Verfahren bekannt, wobei jedoch das Permeat der ersten Stufe der zweiten Stufe zugeführt wird und nach der Lehre dieser Druckschrift zwischen den Stufen ein Turboauflader vorgesehen ist, um den Druck des Permeats aus der ersten Stufe derart zu erhöhen, dass der osmotische Druck an der Membran der zweiten Stufe sicher überwunden wird. Es ist nach der zweiten Stufe ein Speicherbehälter für Permeat vorgesehen, aus dem bei Stillsetzung der Anlage im Übrigen eine Rückspülung der Membran der zweiten Stufe durchführbar ist.

Der vorliegenden Erfindung liegt die Aufgabe zugrunde, ein Verfahren bereitzustellen, das es erlaubt, bei der Umkehrosmose oder Nanofiltration nicht nur den WCF-Faktor weiter zu steigern und somit die Wirtschaftlichkeit und die Umweltfreundlichkeit der Wasseraufbereitung zu erhöhen, sondern auch den Einsatz von Chemikalien weitestgehend zu vermeiden und dennoch eine effektive Reinigung und hohe Standzeit der 2-stufigen Anlage zu erreichen.

Diese Aufgabe wird erfindungsgemäß durch ein Verfahren mit den Merkmalen des Anspruch 1 gelöst.

Dadurch, dass das Konzentrat der ersten Stufe einer weiteren Osmose- oder Nanofiltrationsstufe zugeführt wird, in der wiederum eine Aufspaltung in zu verwerfendes Konzentrat und verwendbares Permeat erreicht wird, wird der WCF-Faktor erhöht. Dadurch dass die zweite Stufe intervallweise abgetrennt und in umgekehrter Richtung durchströmt wird, können Ausfällungen, welche die Funktionsfähigkeit der Membran beeinträchtigen können, durch die Rückspühlung der Membran entfernt werden.

Es hat sich gezeigt, dass eine Rückspühlung der Membran der zweiten Umkehrosmose- oder Nanofiltrationsstufe während eines Zeitraums einiger Minuten die Funktionsfähigkeit des zweistufigen Prozesses für viele Stunden bishin zu Tagen gewährleistet.

Auf dem Gebiet der Brack- und Meerwasserentsalzung ist die Rückspülung der Umkehrosmose- oder Nanofiltrationsmembranen als negativer Effekt, sogenannter "Suck-Back-Effekt" bekannt. Bei Wegnahme des Betriebsdrucks dieser Anlagen fließt infolge des osmotischen Drucks Wasser von der Permeatseite durch die Membran auf die Einspeise-Konzentratseite, um einen Konzentrationsausgleich zu erreichen. Dieser Suck-Back-Effekt ist umso stärker, je höher die Konzentrationsdifferenz ist.

Es hat sich nun mit der Erfindung überraschender Weise gezeigt, dass dieser Effekt in vorteilhafter Weise für eine Selbstreinigung der Membran in der vorstehend beschriebenen Weise genutzt werden kann.

Zum Rückspülen der zweiten Umkehrosmose- oder Nanofiltrationsstufe wäre es denkbar, das Permeat dieser zweiten Stufe einem Behälter zuzuführen, welcher dann ein Reservoir für die Rückspülung dieser zweiten Stufe bildet.

Nach der Erfindung wird das in der zweiten Osmose- oder Nanofiltrationsstufe gewonnene Permeat mit dem Permeat aus der ersten Stufe zusammengeführt, so dass bei der Rückspülung der zweiten Stufe diese vom Permeat der ersten Stufe in umgekehrter Richtung durchströmt werden kann. Es muß solchenfalls keine Rückspülflüssigkeit für die zweite Stufe gesammelt oder bereitgehalten werden. Da die Rückspülung der zweiten Osmose- oder Nanofiltrationsstufe nur verhältnismäßig wenig Zeit benötigt, ist die hierfür erforderliche Permeatmenge der ersten Stufe vernachlässigbar gering.

In besonders bevorzugter Weise wird die erste Umkehrosmose- oder Nanofiltrationsstufe bei einem WCF-Faktor betrieben, bei dem Ausfällungserscheinungen von Salzen nicht auftreten. Die der Konzentratseite der ersten Stufe nachgeschaltete zweite Stufe kann hingegen gewolltermaßen mit einer derart hohen CF-Rate betrieben werden, dass die Ionenkonzentrationen auf der Konzentratseite derart steigen, dass Ausfällungen von Salzen an der Membran entstehen.

Durch den Wasserrückfluß von Permeat durch die Membran der zweiten Umkehrosmose- oder Nanofiltrationsstufe tritt eine intensive Selbstreinigung auf. Dieser Vorgang läßt sich mit einfachen Mitteln derart Automatisieren, dass die Reinigung in bestimmten Zeitintervallen oder in Abhängigkeit anderer Parameter durchgeführt wird. Durch das intervallweise Rückspülen der zweiten Stufe können die Ausfällungen, insbesondere an der Membran beseitigt und verworfen werden, und die Kapazität der zweiten Stufe steht nach kurzer Zeit wieder zur Verfügung. Die zweite Membranstufe wird entsprechend dem Fouling- oder Scalingpotential mit reduzierter spezifischer flächenbezogener Durchflußrate betrieben. Des Weiteren kann es vorteilhaft sein, die Membranstufen mit unterschiedlichen Modulen oder Membranen auszustatten.

Es kann sich des Weiteren als vorteilhaft erweisen, wenn die erste Umkehrosmose- oder Nanofiltrationsstufe mit einer Konzentratrückführung gefahren wird, d.h. wenn zumindest ein Teil des in der ersten Stufe anfallenden Konzentrats zur Zuführseite der ersten Stufe zurückgeführt wird. Hierdurch kann die Effektivität der ersten Stufe erhöht werden.

Eine Umkehrosmose- oder Nanofiltrationsanlage mit zwei Umkehrosmose- oder Nanofiltrationsstufen ist so ausgebildet, dass die zweite Stufe der ersten Stufe konzentratseitig nachgeschaltet und durch eine Absperreinrichtung von dieser abtrennbar ist und das bei Abtrennen der zweiten Stufe von der ersten Stufe die zweite Stufe infolge des osmotischen Drucks in umgekehrter Richtung durchströmbar ist.

Der Begriff der Absperreinrichtung ist im weitesten Sinne zu verstehen. Es wäre z.B. auch denkbar, dass die Konzentratseite der ersten Stufe in ein Behältnis mündet, und dass die zweite Stufe beispielsweise über eine weitere Pumpe aus diesem Behältnis mit dem Konzentrat der ersten Stufe gespeist wird. Das Behältnis, die Pumpe sowie Drossel- und Ventilelemente bilden solchenfalls die Absperreinrichtung.

Für die Rückspülung der zweiten Stufe im abgetrennten Zustand von der ersten Stufe sollte ein bestimmtes Permeatreservoir zur Verfügung stehen, das beispielsweise nur durch Permeat der zweiten Stufe gebildet ist.

Bei einer bevorzugten Ausführungsform der Anlage ist die Permeatseite der zweiten Stufe aber mit der Permeatseite der ersten Stufe verbunden, so dass beim Abtrennen der zweiten Stufe die zweite Stufe vom Permeat der ersten Stufe durchströmbar ist. Solchenfalls kann der Aufwand für ein zusätzliches Reservoir eingespart werden, und es braucht nur eine verhältnismäßig einfache Verrohrung vorgesehen zu werden.

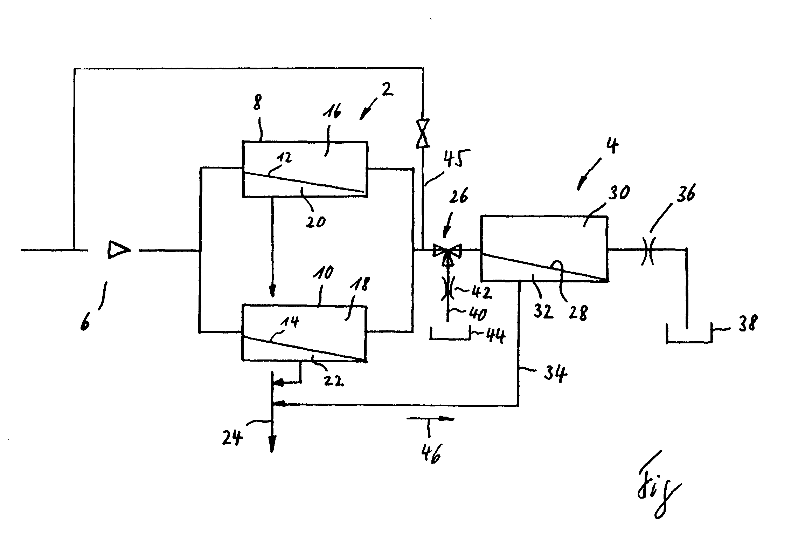

Weitere Merkmale, Einzelheiten und Vorteile der Erfindung ergeben sich aus den beigefügten Patentansprüchen sowie der zeichnerischen Darstellung und nachfolgenden Beschreibung einer bevorzugten Ausführungsform der erfindungsgemäßen Umkehrosmoseanlage. In der Zeichnung zeigt:

Die Figur,      eine schematische Darstellung einer erfindungsgemäßen Umkehrosmoseanlage.

Die Figur zeigt eine Umkehrosmoseanlage mit einer ersten und einer zweiten Osmosestufe 2 bzw. 4. Aufzubereitendes Rohwasser wird über eine Pumpe 6 der ersten Umkehrosmosestufe 2, welche beispielsweise zwei parallel angeordnete Membranmodule 8, 10 aufweist, zugeführt. Die Membranmodule 8, 10 sind in ansich bekannter Weise ausgeführt und brauchen daher nicht näher beschrieben zu werden. Ihre Membranen 12, 14 trennen die zulaufseitige Konzentratseite 16, 18 von der Permeatseite 20, 22. Die Permeatseiten 20, 22 münden in eine gemeinsame Permeatleitung 24. Die Konzentratseiten 16, 18 der ersten Umkehrosmosestufe 2 führen über eine Absperreinrichtung 26 zu der zweiten Osmosestufe 4, die wiederum eine Membran 28 aufweist, welche die zulaufseitige Konzentratseite 30 von der Permeatseite 32 trennt. Von der Permeatseite 32 führt eine Leitung 34 zu der permeatseitigen Leitung 24 der ersten Stufe 2. Die Konzentratseite 30 ist über eine Drosseleinrichtung 36 mit einem Abwassersammelbehälter 38 verbunden. Des weiteren ist eine Abzweigleitung 40 mit einer Drossel 42 vorgesehen, über welche bei geschlossenem Absperrventil 26 die Konzentratseiten 16, 18 der ersten Osmosestufe 2 einem Abwassersammelsystem 44 zugeführt wird. Ferner ist eine Konzentratrückführleitung 45 zur Zuführseite der ersten Stufe 2 vorgesehen.

Beim Betrieb beider Stufen 2, 4 der Umkehrosmoseanlage wird über die Leitung 24 Reinwasser hergestellt. Dadurch, dass die zweite Osmosestufe 4 konzentratzeitig der ersten Osmosestufe 2 nachgeschaltet ist, wird eine Erhöhung des WCF-Faktors gegenüber Permeat und Konzentrat der ersten Stufe 2 erreicht. Die erste Stufe 2 wird vorzugsweise bei einem derartigen WCF-Faktor "gefahren" , dass es innerhalb der ersten Stufe nicht zu Ausfällungen von Salzen (Scaling) kommt. Ebenso wird vorzugsweise darauf geachtet, dass der PH-Wert im sauren Bereich liegt, so dass Fäulniserscheinungen (Fouling) weitestgehend vermieden werden können.

Demgegenüber kann die zweite Stufe 4 mit einer solchen CF-Rate betrieben werden, dass die Konzentrationen der Salze auf der Konzentratseite derart ansteigen, dass Ausfällungen von Salzen auftreten können. Die hierbei gebildeten störenden und die Funktionsfähigkeit der Membran 28 beeinträchtigenden Beläge werden durch Rückspülen der Membran 28 der zweiten Osmosestufe 4 wieder beseitigt. Hierfür wird die Absperreinrichtung 26 geschlossen. Infolge des osmotischen Drucks der Ionen zwischen der Konzentrat- und Permeatseite 30, 32 der zweiten Stufe 4 findet eine Rückspülung der Membran 28 statt, d.h. die Leitung 34 wird in umgekehrter Richtung (Pfeil 46) vom Permeat aus der ersten Osmosestufe 2 durchströmt. Hierdurch tritt eine Selbstreinigung der Membran 28 ein, und nach kurzer Zeit ist die zweite Osmosestufe 4 wieder einsatzbereit. Während der Rückspülung der zweiten Stufe 4 wird das Konzentrat über die Zweigleitung 40 mit der Drossel 42 in einen Behälter 44 abgeführt und anschließend verworfen. Es wäre aber auch denkbar, dass die Flüssigkeit bei anschließender Inbetriebnahme der zweiten Stufe 4 dieser wieder zugeführt wird. Schießlich wäre es auch denkbar, dass während der verhältnismäßig kurzen Zeit der Rückspülung der zweiten Stufe die Konzentratseiten 16, 18 der ersten Stufe 2 nicht weiter abgeleitet werden. Dies birgt jedoch die Gefahr, dass der WCF-Faktor bzw. die Aufkonzentrierungsrate CF in der ersten Stufe derart erhöht werden, dass dort ungewolltermaßen Ausfällungen auftreten.

**Patentansprüche**

1. Verfahren zum Aufbereiten von Wasser, insbesondere zum Herstellen von Reinstwasser, durch Umkehrosmose oder Nanofiltration, wobei das aufzubereitende Wasser einer ersten Osmose- oder Nanofiltrationsstufe (2) zugeführt und dabei Permeat (20, 22) und Konzentrat (16, 18) gewonnen wird und das Konzentrat der ersten Osmose- oder Nanofiltrationsstufe (2) der Konzentratseite einer zweiten Osmose- oder Nanofiltrationsstufe (4) zugeführt wird, und wobei unter Inbetriebhaltung der ersten Stufe (2) intervallweise die zweite Stufe (4) von der ersten abgetrennt und gereinigt wird, **dadurch gekennzeichnet, dass** die Membran der zweiten Stufe (4) im abgetrennten Zustand der zweiten Stufe (4) und damit unter Wegnahme des Betriebsdrucks infolge des osmotischen Drucks von der Permeatseite zur Konzentratseite in umgekehrter Richtung durchströmt wird und dabei gereinigt wird und dass das in der zweiten Osmose- oder Nanofiltrationsstufe (4) gewonnene Permeat (34) mit dem Permeat (20, 22) aus der ersten Stufe (2) zusammengeführt wird, so dass die zweite Stufe (4) bei der Rückspülung vom Permeat (20, 22) der ersten Stufe (2) in umgekehrter Richtung durchströmt werden kann, und dass die zweite Membran stufe (4) bei einem niedrigeren spezifischen Fluss als die erste Stufe (2) betrieben wird.

2. Verfahren nach Anspruch 1, **dadurch gekennzeichnet, dass** die erste Umkehrosmosestufe (2) bei einem WCF-Faktor (Water Conversion Factor) betrieben wird, bei dem Ausfällungserscheinungen von Salzen nicht auftreten.

3. Verfahren nach Anspruch 1 oder 2, **dadurch gekennzeichnet, dass** die zweite Osmosestufe (4) bei einem WCF-Faktor (Water Conversion Factor) von 40-80 % betrieben wird.

4. Verfahren nach einem der vorstehenden Ansprüche, **dadurch gekennzeichnet, dass** die Osmosestufen (2, 4) mit unterschiedlichen Membranen betrieben werden.

5. Verfahren nach einem der vorstehenden Ansprüche, **dadurch gekennzeichnet, dass** die zweite Umkehrosmosestufe (4) bei einer solchen CF-Rate (Aufkonzentrierungsrate CF = 100/100 - WCF) betrieben wird, dass die Ionenkonzentrationen auf der Konzentratseite (30) derart steigen können, dass Ausfällungen von Salzen an der Membran entstehen.

6. Verfahren nach einem der vorstehenden Ansprüche, **dadurch gekennzeichnet, dass** ein Teil des Konzentrats der ersten Umkehrosmose- oder Nanofiltrationsstufe (2) zur Zuführseite der ersten Stufe (2) zurückgeführt wird.


## Claims

1. Method for treating water, in particular for producing ultra-pure water, by reverse osmosis or nanofiltration, wherein the water to be treated is fed to a first osmosis or nanofiltration stage (2), in which a permeate (20, 22) and a concentrate (16, 18) are obtained, and the concentrate of the first osmosis or nanofiltration stage (2) is fed to the concentrate side of a second osmosis or nanofiltration stage (4), and wherein at intervals, during ongoing operation of the first stage (2), the second stage (4) is isolated from the first and cleaned,
**characterized in that**, when the second stage (4) is isolated and its operating pressure therefore removed, the membrane of the second stage (4) is traversed in the reverse direction as a result of the osmotic pressure from the permeate side to the concentrate side, and is thereby cleaned, and **in that** the permeate (34) obtained in the second osmosis or nanofiltration stage (4) is combined with the permeate (20, 22) from the first stage (2), with the result that the second stage (4) during backflushing can be traversed in the reverse direction by the permeate (20, 22) of the first stage (2), and **in that** the second membrane stage (4) is operated at a lower specific flow rate than the first stage (2).

2. Method according to claim 1, **characterized in that** the first reverse osmosis stage (2) is operated at a WCF (Water Conversion Factor) at which salts are not precipitated.

3. Method according to claim 1 or claim 2, **characterized in that** the second osmosis stage (4) is operated at a WCF (Water Conversion Factor) of 40-80%.

4. Method according to any one of the preceding claims, **characterized in that** the osmosis stages (2, 4) are operated with different membranes.

5. Method according to any one of the preceding claims, **characterized in that** the second reverse osmosis stage (4) is operated at a CF rate (Concentration Factor CF = 100/100 - WCF) whereby the ion concentrations on the concentrate side (30) can rise so that salts are precipitated on the membrane.

6. Method according to any one of the preceding claims, **characterized in that** a portion of the concentrate of the first reverse osmosis or nanofiltration stage (2) is fed back to the input side of the first stage (2).


## Revendications

1. Procédé pour le traitement d'eau, en particulier pour la fabrication d'eau très pure, par osmose réversible ou nanofiltration, l'eau à traiter étant amenée à un premier niveau d'osmose ou de nanofiltration (2) et du perméat (20, 22) et du concentré (16, 18) étant entretenus à cette occasion et le concentré du premier niveau d'osmose ou de nanofiltration (2) étant amené au côté concentré d'un second niveau d'osmose ou de nanofiltration (4), et le second niveau (4) étant séparé par intervalles du premier et étant nettoyé par intervalles avec la mise en service du premier niveau (2), **caractérisé en ce que** la membrane du second niveau (4) est traversée du côté perméat vers le côté concentré dans le sens inverse lorsque le second niveau (4) est séparé et donc avec la suppression de la pression de service, la membrane est nettoyée à cette occasion et **en ce que** le perméat (34), obtenu dans le second niveau d'osmose ou de nanofiltration (4) est regroupé avec le perméat (20, 22) provenant du premier niveau (2), de sorte que le second niveau (4) peut être traversé lors du rétrolavage par le perméat (20, 22) du premier niveau (2) dans le sens inverse, et **en ce que** le second niveau à membrane (4) est exploité avec un flux spécifique plus faible que le premier niveau (2).

2. Procédé selon la revendication 1, **caractérisé en ce que** le premier niveau d'osmose réversible (2) est exploité avec un facteur WCF (Water Conversion Factor), avec lequel il n'apparaît pas de phénomènes de précipitations de sels.

3. Procédé selon la revendication 1 ou 2, **caractérisé en ce que** le second niveau d'osmose (4) est exploité avec un facteur WCF (Water Conversion Factor) de 40-80 %.

4. Procédé selon l'une quelconque des revendications précédentes, **caractérisé en ce que** les niveaux d'osmose (2, 4) sont exploités avec différentes membranes.

**5.** Procédé selon l'une quelconque des revendications précédentes, **caractérisé en ce que** le second niveau d'osmose réversible (4) est exploité avec un tel taux CF (taux de concentration CF = 100/100 - WCF) que les concentrations d'ions du côté concentré (30) peuvent augmenter de telle sorte qu'il se forme des précipitations de sels sur la membrane.

**6.** Procédé selon l'une quelconque des revendications précédentes, **caractérisé en ce qu'**une partie du concentré du premier niveau d'osmose réversible ou de nanofiltration (2) est recyclée vers le côté arrivée du premier niveau (2).

Fig